# EUROPÄISCHE PATENTSCHRIFT

(11) **EP 0 860 488 B1**
(45) Veröffentlichungstag und Bekanntmachung des Hinweises auf die Patenterteilung: **15.09.2004**
(21) Anmeldenummer: 98102022.5
(22) Anmeldetag: 05.02.1998
(51) Int. Cl.: C09G 1/02

(54) **Verfahren zum Polieren von Lichtwellenleiter-Endflächen**
Method of polishing end surfaces of light guides
Méthode de polissage des faces d'extrémité de fibres optiques

(30) Priorität: 21.02.1997 DE 19708652
(43) Veröffentlichungstag der Anmeldung: 26.08.1998
(73) Patentinhaber: Infineon Technologies AG, 81669 München (DE)
(72) Erfinder: Melchior, Lutz, 12559 Berlin (DE); Klix, Detlef, 16359 Biesenthal (DE)
(74) Vertreter: Müller, Wolfram Hubertus, Dipl.-Phys.

(56) Entgegenhaltungen:
- EP-A- 0 684 634
- WO-A-96/16436

## Beschreibung

Die Erfindung liegt auf dem Gebiet der Herstellung und Behandlung von Lichtwellenleiter-Endflächen mit hoher optischer Güte (Endflächenpräparation) und betrifft ein Verfahren zum Polieren von Lichtwellenleiter-Endflächen, bei dem während des Polierprozesses eine Flüssigkeit auf die Endflächen aufgebracht wird.

Es sind thermische und mechanische Verfahren bekannt, mit denen eine später als Kontaktfläche zur optischen Ankopplung an einen Kopplungspartner dienende Endfläche eines Lichtwellenleiters bearbeitet oder ausgeformt werden kann. Um die Kontur oder gemoetrische Form einer solchen, nachfolgend auch Stirnfläche genannten Endfläche präzise und mit hoher Wiederholbarkeit zu erzeugen, werden Schleifverfahren angewendet.

Die DE 42 42 127 C2 offenbart ein Schleifverfahren, bei dem der Lichtwellenleiter beispielsweise von einer mit ihm fest verbundenen Hülse oder einem Anschlußstecker für die Schleifvorgänge fixiert wird. Die Stirnfläche der Hülse oder des Steckers wird schrittweise entlang einer bogenförmigen Bahn von einem Schleifwerkzeug bearbeitet. Das Schleifwerkzeug ist auf einer drehangetriebenen Grundplatte befestigt. Um Schleifvorgänge mit zunehmend feiner werdender Körnung rascher aufeinanderfolgend durchführen zu können, ist ein Abstandsring aus abriebfestem Material an der dem Schleifwerkzeug zugekehrten Unterfläche des Lichtwellenleiters angeordnet und die Verwendung von Grundplatten unterschiedlicher Härte vorgesehen.

Aus der DE 37 34 741 A1 ist ein weiteres Schleifverfahren bekannt, mit dem Stecker- oder Lichtwellenleiterenden ballig geschliffen werden können. Dazu wird das stabilisierte Lichtwellenleiterende auf eine mit einem Schleifmittel beschichtete Membran gedrückt und senkrecht dazu bewegt. Die Membran umfaßt eine Federstahlfolie, die auf einer im Schleifbereich vorzugsweise mit einer Ausnehmung versehenen Grundplatte angeordnet ist.

Aus der US-PS 5,136,820 ist ein Verfahren der eingangs genannten Art bekannt. Bei diesem bekannten Verfahren wird ein von einer Keramik-Hülse aufgenommener Lichtwellenleiter mit seiner Stirnfläche gegen ein gewobenes Nylontuch gedrückt, das auf eine Schleifscheibe gespannt ist. Während des Poliervorganges wird eine wässrige Aufschwemmung von Siliziumdioxid-Partikeln zugeführt.

Die vorbeschriebenen Schleifverfahren führen bei konventionellen Materialpaarungen, insbesondere bei Lichtwellenleitersteckerstiften, zu zufriedenstellenden Ergebnissen. Unter konventionellen Materialpaarungen ist auf dem Gebiet der Endflächenpräparation von Lichtwellenleitern eine Kombination von Lichtwellenleitern aus Glas einerseits und metallischen oder keramischen Hülsen oder Steckerstiften andererseits zu verstehen. Die traditionellen Verfahren finden jedoch ihre Anwendungsgrenze in Fällen, in denen entweder Stirnflächen höchster optischer Güte gefordert oder neuartige Materialpaarungen bearbeitet werden müssen. Beispielsweise ist derzeit ein Trend zu mehrkanaligen Lichtwellenleitersteckverbindern erkennbar, bei denen Lichtwellenleiter aus Glas von Kunststoffsteckern aufgenommen oder abgeschlossen sind. Wenn derartige Steckverbinder bei hochbitratigen optischen Datenübertragungssystemen eingesetzt werden sollen, bestehen zusätzliche Forderungen nach einer absolut kratzerfreien, ballig polierten und um vorzugsweise 8° zur Längsnormalen schrägen Normalen der Lichtwellenleiter-Stirnfläche. Handelt es sich um einen Mehrfachsteckerverbinder, ist zusätzlich ein definierter Lichtwellenleitervorstand erwünscht.

Die Aufgabe der Erfindung besteht in der Schaffung eines Verfahrens zum Polieren von Lichtwellenleiter-Endflächen, das die Erzeugung von Endflächen höchster optischer Güte auch bei inhomogenen Materialpaarungen von Lichtwellenleiter- und Aufnahmematerial oder Steckermaterial ermöglicht und das insbesondere für die Bearbeitung von in einem Kunststoffstecker aufgenommenen Lichtwellenleiterenden geeignet ist.

Zur Lösung dieser Aufgabe wird erfindungsgemäß ein Verfahren zum Polieren von Lichtwellenleiter-Endflächen vorgeschlagen, bei dem als Poliermaterial Filz und eine flüssige Komponente verwendet wird, die eine Suspension von Schleifkörnern und einen ölartigen Bestandteil umfaßt. In praktischen Versuchen hat sich gezeigt, daß bei Verwendung von Filz als Poliermaterial insbesondere bei einer Werkstoffkombination Glas/Kunststoff ein sehr gleichmäßiges Anpolieren der jeweiligen Endfläche (Stirnfläche) bzw. die Erzeugung eines definierten Lichtwellenleiter-Vorstandes gelingt. Die Filzmaterialien eigene feine Struktur führt in vorteilhafter Weise zu äußerst kratzfreien Stirnflächen. Als besonders geeignete Filzmaterialien haben sich Wolle oder Tierhaare erwiesen, die sich unter Einwirkung von Wärme, Druck und Seife sehr fein kräuseln und gegenseitig umschlingen. Das Filzmaterial kann bevorzugt als Schleifscheibe oder Schleifteller geformt sein.

Die flüssige Komponente dient in vorteilhafter Weise zum Abtrag abpolierter Partikel aus dem Polierbereich und bewirkt durch den Schmiereffekt eine besonders schonende OberflächenBearbeitung. Der ölartige Bestandteil umfaßt vorzugsweise ein Gemisch aus Isopropanol und Isopropandiol. Dadurch werden vorteilhafterweise die Schleif- und Poliereigenschaften des Schleifmittels besonders zur Ausbildung balliger Lichtwellenleiter-Stirnflächen und insbesondere bei Materialpaarungen von Kunststoff und Glas optimiert. Der in seinen Eigenschaften ölähnliche Bestandteil verhindert außerdem in vorteilhafter Weise ein unerwünschtes An- oder Austrocknen der Suspension. Diese bildet einen permanenten Film, der auf der Stirnfläche ein kratzerfreies Polieren gewährleistet.

Besonders bevorzugt werden als Schleifpulver Siliziumoxid-Körner verwendet, die vorzugsweise eine Körnung von 0,05 µm aufweisen.

Mit dem erfindungsgemäßen Verfahren zum Polieren von Lichtwellenleiter-Endflächen können die sich zunehmender Verbreitung erfreuenden Kunststoffstecker mit Lichtwellenleitern aus Glasmaterial wirtschaftlich und unter Erzielung höchster optischer Güten stirnflächenseitig bearbeitet werden. Erst durch diese Bearbeitungsmöglichkeit können hochpräzise gefertigte Steckerteile aus Kunststoff als Massenprodukt eingesetzt werden. Die feine Struktur des Filzmaterials und der von der flüssigen Komponente gebildete permanente Gleitfilm ermöglichen ein kratzerfreies Polieren und eine Vermeidung der bei üblichen Verfahren auftretenden Faserrandausbrüche.

## Patentansprüche

1. Verfahren zum Polieren von Lichtwellenleiter-Endflächen, wobei während des Polierprozesses eine Flüssigkeit auf die Endflächen aufgebracht wird,
**dadurch gekennzeichnet, dass**
- als Poliermaterial Filz verwendet wird und
- als Flüssigkeit eine Suspension von zumindest einem Schleifpulver in einem ölartigen Bestandteil verwendet wird.

2. Verfahren nach Anspruch 1, **dadurch gekennzeichnet , dass** der ölartige Bestandteil ein Gemisch aus Isopropanol und Isopropandiol umfasst.

3. Verfahren nach Anspruch 1 oder 2, **dadurch gekennzeichnet, dass** die Schleifkörner Siliziumoxid-Körner sind.

## Claims

1. Method of polishing end surfaces of optical waveguides, a fluid being applied to the end surfaces during the polishing process,
**characterized in that**
- felt is used as the polishing material and
- a suspension of at least one abrasive powder in an oily constituent is used as the fluid.

2. Method according to Claim 1, **characterized in that** the oily constituent comprises a mixture of isopropanol and isopropane diol.

3. Method according to Claim 1 or 2, **characterized in that** the abrasive particles are silicon oxide particles.

## Revendications

1. Procédé de polissage des faces d'extrémité de fibres optiques en apportant un liquide sur les faces d'extrémité pendant l'opération de polissage,
**caractérisé en ce que**
- on utilise comme matière de polissage du feutre et
- on utilise comme liquide une suspension d'au moins une poudre abrasive dans un constituant huileux.

2. Procédé de polissage suivant la revendication 1,
**caractérisé en ce que**
le constituant huileux comprend un mélange d'isopropanol et d'isopropanediol.

3. Procédé de polissage suivant la revendication 1 ou 2,
**caractérisé en ce que**
les grains abrasifs sont des grains d'oxyde de silicium.
